# EUROPÄISCHE PATENTSCHRIFT

(11) **EP 1 653 432 B1**
(45) Veröffentlichungstag und Bekanntmachung des Hinweises auf die Patenterteilung: **25.08.2010**
(21) Anmeldenummer: 04105302.6
(22) Anmeldetag: 26.10.2004
(51) Int. Cl.: G09F 21/04, G09F 27/00, G09F 21/06

(54) **Verfahren und Vehikel zum Versenden von elektronischen Werbenachrichten**
Method and vehicle for distributing electronic advertisement messages
Procédé et véhicule pour la diffusion de messages publicitaires électroniques

(43) Veröffentlichungstag der Anmeldung: 03.05.2006
(73) Patentinhaber: Swisscom AG, 3050 Bern (CH)
(72) Erfinder: Lauper, Eric, CH-3014 Bern (CH)
(74) Vertreter: P&TS Patents & Technology Surveys SA

(56) Entgegenhaltungen:
- WO-A-2004/072933
- FR-A- 2 827 107
- US-A1- 2004 049 960
- US-A1- 2004 068 439
- US-B1- 6 236 330
- PATENT ABSTRACTS OF JAPAN Bd. 2003, Nr. 12, 5. Dezember 2003 (2003-12-05) & JP 2003 263123 A (NTT COMWARE CORP), 19. September 2003 (2003-09-19)

## Beschreibung

### Technisches Gebiet

Die Erfindung bezieht sich auf ein Verfahren und auf ein Vehikel zum Versenden von elektronischen Werbe-, Informations- oder Sprachnachrichten gemäss den unabhängigen Ansprüchen.

### Stand der Technik

Aus dem Stand der Technik sind verschiedene Systeme zur Verteilung von Informationen und verschiedene Werbeträger bekannt geworden. Es ist bekannt, dass Flugzeuge, die einen Werbebanner hinter sich herziehen, über einer Veranstaltung kreisen und auf diese Weise die Veranstaltungsbesucher über ein bestimmtes Produkt informieren.

Weiter offenbart beispielsweise das Patent US-B1-6,428,383 ein ferngesteuertes Spielzeugauto mit einem oder mehreren Audioausgängen. Das Spielzeugauto enthält beispielsweise einen Kassettenrecorder, einen CD-Spieler oder ein Radio. Sobald der Benutzer die gewünschte Musik oder Werbenachrichten eingestellt hat, ist es möglich, das Vehikel ferngesteuert in die Nähe einer Veranstaltung zu bringen und die anwesenden Personen auf diese Weise zu unterhalten, über Neuigkeiten zu informieren, etc. Geschwindigkeit und das Ziel kann mit Hilfe der Fernsteuerung eingestellt und erreicht werden. Zusätzlich kann das Auto mit einer Hupe, speziellen Lichtern, einer Uhr oder Zeitschaltuhr ausgestattet werden. Wenig vorteilhaft bei dieser Ausführungsform ist allerdings, dass die Nachrichten vorher festgelegt werden müssen und nur modifiziert werden können, wenn das Auto zum Betreiber zurückkehrt. Es ist auch nicht möglich, die Nachrichten auf elektronische Weise zu verteilen.

Die europäische Patentanmeldung EP-A1-1 195 701 offenbart ein Verfahren zur Sendung von Werbungsmeldungen oder Bannern, die auch Audioelemente enthalten können. Die Nachrichten werden den Benutzern von mobilen Telefonen über ein Mobilfunknetz zugeschickt.

Ein elektronisches Werbeplakat ist aus der Schrift US-A-5,966,696 bekannt. Das Werbeplakat kennt einen Ruhemodus und einen aktiven Modus. Im Ruhemodus werden vorprogrammierte Elemente, die keine Werbung enthalten, abgespielt. Sobald sich eine Person diesem Werbeplakat nähert und ein Bewegungsmelder diese Person erfasst, schaltet das Plakat automatisch in den aktiven Modus und spielt ein vorgegebenes, farbiges Werbeprogramm, das auch Audioanteile enthalten kann. Um festzustellen, welche Werbesendungen von den Verbrauchern bevorzugt werden, wird festgehalten, welches Programm abgespielt wurde und wie lange das Programm angesehen wurde. Auch in dieser Ausführungsform können leider keine elektronischen Nachrichten übertragen werden.

Ein ähnliches Verfahren und System ist aus der französischen Patentanmeldung FR-A1-2 827 107 bekannt. Eine elektronische Werbetafel, die mit einer Sendestation ausgestattet ist, detektiert Personen, die sich im Umfeld der Werbetafel befinden, automatisch. Die Sendestation ist in einem Mobilfunknetz wie GSM, UTMS oder mit einer anderen Übertragungstechnik wie Bluetooth oder DECT eingebunden. Sobald eine Person, die an das selbe Mobilfunknetz oder an die Übertragungstechnik angebunden ist, in die Nähe der Werbetafel tritt, werden beispielsweise vorbestellte Werbemeldungen oder andere elektronische Nachrichten via SMS, etc. versendet. Eine angeschlossene zentrale Recheneinheit überwacht die Versendung der Werbemeldungen und wird zur Ermittlung von statistischen Daten oder zur Kostenermittlung verwendet. Da das System stationär ist, ist es jedoch nur dann möglich, Nachrichten zu übertragen, wenn sich die Zielperson im entsprechenden Sektor der Werbetafel aufhält.

Das Dokument US 2004/068439 A ist als nächstliegender Stand der Technik angesehen.

### Darstellung der Erfindung

Es ist Ziel der Erfindung, die Nachteile der vorstehenden Systeme und Verfahren zu überwinden und ein Verfahren und eine Vorrichtung zu schaffen, mit welchem und mit welcher elektronische Werbe-, Informations- oder Sprachnachrichten an eine grosse Anzahl von Mobil- oder Kommunikationsgeräten, die sich an verschiedenen Orten aufhalten, gesendet werden kann. Es soll möglich sein, die zu sendende elektronische Werbemitteilung ohne grossen Aufwand nachträglich zu verändern.

Erfindungsgemäss wird dies gemäss dem unabhängigen Verfahrensanspruch dadurch erreicht, dass elektronische Werbe-, Informations-oder Sprachnachrichten mittels eines steuerbaren, sich bewegenden, unbemannten Vehikels versendet werden, wobei das erfindungsgemässe Verfahren die folgenden Verfahrensschritte umfasst:
das Vehikel bewegt sich in einem Netz von Kommunikationsgeräten in eine Richtung und
wenn sich das Vehikel einem Kommunikationsgerät nähert, wird die Sendung einer elektronische Werbe-, Informations- oder Sprachnachricht an das Kommunikationsgerät vom Vehikel selbst oder von einem anderen Kommunikationsgerät, das mit dem vehikel über eine Telekommunikationsnetz verbunden ist, ausgelöst wobei die Werbe-, Informations-, oder Sprachnachricht in alle sich in der Nähe befindenden Kommunikationgeräte oder an einen vorbestimmten Kreis von Kommunikationsgeräten, die sich in der Nähe befinden, gesendet wird.

Erfindungsgemäss wird die genannte Aufgabe auch durch ein Vehikel mit den im unabhängigen Anspruch 21 genannten Merkmalen gelöst.

Das Vehikel kann beispielsweise die elektronische Werbe-, Informations- oder Sprachnachricht mittels einer Schnittstelle wie Bluetooth, DECT, WLAN, RFID oder einer anderen geeigneten Schnittstelle an sich in der Nähe befindende elektronische Kommunikationsgeräte wie Computer, tragbare Computer, Kopfhörer, Mobiltelefone, Bluetooth, Spielkonsolen oder pDAs versenden oder das Vehikel wird von einem Nachrichtenserver als benanntes anderes Kommunikationsgerät innerhalb eines Telekommunikationsnetzes wie GSM oder UMTS identifiziert, und der Nachrichtenserver erfasst sowohl die Position des Vehikels als auch von sich in der Nähe des Vehikels befindenden Mobilgeräten. Auf diese Weise kann der Nachrichtenserver und/oder das Vehikel über das Telekommunikationsnetz die benannte Werbe-, Informations- oder Sprachnachricht an diese Mobilgeräte versenden.

Der Nachrichtenserver und/oder das Vehikel kann die Werbe-, Informations- oder Sprachnachricht an alle sich in der Nähe des Vehikels befindenden Mobilgeräte als Broadcastmeldung senden oder nur an sich in der Nähe des Vehikels befindende Mobilgeräte, deren Benutzer einen bestimmten Dienst abonniert haben, die ein bestimmtes Benutzerprofil haben oder die eine gewisse Eigenschaft aufweisen. Abonnierte Dienste, wie Wettermeldungen, die ausgelosten Lottozahlen oder Informationen über zu verkaufende Produkte können auf die genannte Art einfach übertragen werden. Eine Werbemeldung könnte in Form einer SMS oder USSD, als E-Mails, als IP-Pakete, als Dateien oder als web-pages versendet werden. Es kann sich auch um Nachrichten handeln, die Multimediadateien, also Musikstücke (mp3), Filme, Videos, etc. enthalten.

Als solches Vehikel eignet sich beispielsweise ein Flugzeug oder Modell- oder Mikroflugzeug, ein Helikopter oder Modell- oder Mikrohelikopter, ein Ballon, ein Auto oder Spielzeugauto, ein Schiff oder ein Roboter oder ein anderes sich bewegendes, steuerbares, autonomes und unbemanntes Fahrzeug. Es sind auch fliegende Mikroroboter bekannt, die weniger als 100 Gramm und vorzugsweise weniger 20 Gramm wiegen, und die insbesondere zum Fliegen in Innenräumen bestimmt sind. Ein solcher Roboter kann auch autonom Entscheidungen treffen, um die Richtung zu ändern oder um Nachrichten zu verwalten und zu versenden oder zu übertragen. Vorteilhaft kann sich ein solches Vehikel relativ schnell fortbewegen und es wäre möglich, das Vehikel auch über Besucher einer Veranstaltung fliegen zu lassen, um diese durch die Werbenachrichten zu informieren.

Wenn jemand beispielsweise das Vehikel zu Werbezwecken mieten möchte, könnte er vorteilhaft Anweisungen zum Kreis der Empfänger und den Inhalt der zu versendenden Werbemeldung an den Nachrichtenserver oder das Vehikel schicken und dieses verrichtet die Verteilung der Werbung auf die beschriebene Art und Weise. Je nach Verwendungszweck könnte dem Empfänger einer solchen elektronischen Werbemeldung diese Nachricht verrechnet oder vergütet werden.

Vorteilhaft kann mit dem erfindungsgemässen Verfahren elektronische Werbemeldungen an eine grosse Anzahl von Personen, die über ein entsprechendes Mobilgerät oder ein Kommunikationsgerät verfügen und sich an verschiedenen Orten aufhalten, versendet werden. Da man die elektronische Mitteilung auch spontan über den bereits genannten Nachrichtenserver ändern kann, ist es nicht notwenig, dass das Vehikel zu einer Basisstation zurückkehrt, um die zu versendende Werbung oder die Informationen auszutauschen oder zu verändern.

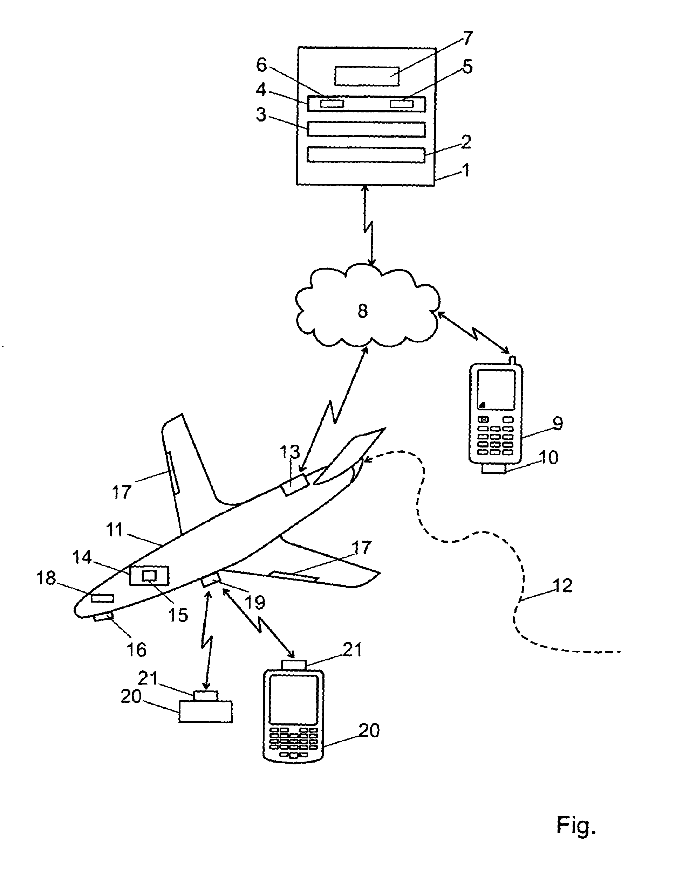

### Kurze Beschreibung der Zeichnung

Die Erfindung wird anhand der einzigen Figur näher erläutert, die ein Telekommunikationssystem zeigt, mit welchem das erfindungsgemässe Verfahren durchgeführt werden kann. Es werden nur die für das Verständnis der Erfindung wichtigen Elemente dargestellt.

### Wege zur Ausführung der Erfindung

Die einzige Figur zeigt ein Telekommunikationssystem, welches einen Nachrichtenserver 1 in einem Telekommunikationsnetz 8 aufweist und mit welchem das erfindungsgemässe Verfahren zum Versenden von Werbemeldungen durchgeführt werden kann.

Der Nachrichtenserver 1 ist eine feste Vorrichtung im Telekommunikationsnetz 8. Der Nachrichtenserver 1 enthält ein Modul 2, welches den Nachrichtenserver 1 mit dem Telekommunikationsnetz 8 verbindet und mit welchem Werbemeldungen empfangen und versendet werden können. Unter Werbemeldungen werden im Folgenden allgemein Werbe-, Informations- oder Sprachnachrichten verstanden, deren Zweck die Distribution von Informationen ist. Des Weiteren enthält der Nachrichtenserver 1 ein Standortbestimmungssystem 3 oder er kann auf ein solches System zurückgreifen. Der Standort wird also entweder im Telekommunikationsnetz 8 bestimmt (beispielsweise auf der Basis von Signalen aus den Basisstationen) oder in den Mobilgeräten 9, falls sie mit satellitengesteuerten Standortbestimmungsmitteln (GPS) versehen sind.

Der Nachrichtenserver 1 enthält ausserdem einen Speicherbereich 4. Das genannte Telekommunikationsnetz 8 ist ein bekanntes Mobilfunknetz wie GSM oder UMTS. Es kann sich aber auch um ein anderes geeignetes Netz handeln, welches dieselben Funktionen erfüllt.

An das Telekommunikationsnetz 8 sind als Kommunikationsgeräte 9 verschiedene Mobilgeräte von diversen Mobilteilnehmern angeschlossen. Ein Mobilgerät 9 weist einen Speicherbereich mit einem Identifizierungsmodul 10 auf, in dem die persönlichen Daten des Mobilteilnehmers gespeichert sind, und welches den Teilnehmer in dem Telekommunikationsnetz 8 identifiziert.

In dem Telekommunikationsnetz 8 ist zudem ein steuerbares und unbemanntes Vehikel 11 eingebunden. Als solch ein Vehikel 11 eignet sich beispielsweise ein Flugzeug oder Modell- oder Mikroflugzeug, ein Helikopter oder Modell- oder Mikrohelikopter, ein Ballon, ein Auto oder Spielzeugauto, ein Schiff oder ein Roboter oder ein anderes sich bewegendes, steuerbares, autonomes und unbemanntes Fahrzeug, welches für den hier beschriebenen Zweck geeignet ist. Es sind auch fliegende Mikroroboter bekannt, die weniger als 100 Gramm und vorzugsweise weniger 20 Gramm wiegen, und die insbesondere zum Fliegen in Innenräumen bestimmt sind. Ein solcher Roboter kann auch autonom Entscheidungen treffen, um die Richtung zu ändern oder um Nachrichten zu verwalten und zu versenden oder zu übertragen.

Wie in der einzigen Figur sichtbar, bewegt sich das Vehikel 11 auf einem Weg 12 entlang einer bestimmten Route oder in einer noch näher zu definierenden Richtung. Das Vehikel 11 verfügt ebenfalls über ein Identifizierungsmodul 13, mit welchem es in dem genannten Telekommunikationsnetz 8 eingebunden ist und identifiziert wird. Das Vehikel 11 kann also ebenso wie die genannten Mobilgeräte 9 elektronische Mitteilungen über das Telekommunikationsnetz 8 senden und empfangen. Um sich zu orientieren, befinden sich am Vehikel 11 einige Sensoren 16, die es dem Vehikel 11 erlauben, Hindernisse auf seinem Weg 12 zu detektieren. Als Sensoren 16 sind beispielsweise ccD-Sensoren, Sonare, Berührungssensoren, Beschleunigungssensoren, Balisen, etc. oder andere Sensoren geeignet, die zu diesem Zweck verwendet werden können. Das Vehikel 11 verfügt weiter über eine oder mehrere Einrichtungen 17 zur Bestimmung und zur Korrektur der eingeschlagenen Richtung und über eine Energieversorgungseinrichtung 18. Entsprechend den oben genannten Vehikeln 11 kann es sich bei der Energieversorgungseinrichtung 18 um einen Tank mit Benzin, Wasserstoff, Gas handeln oder es kann mittels solarer Energie, durch Batterien oder Akkumulatoren oder einen anderen Treibstoff betrieben werden. Es ist denkbar, dass das Vehikel 11 zum Auftanken von Treibstoff zu einer in der einzigen Figur nicht dargestellten Service-Station zurückkehrt.

Das Vehikel 11 kann des Weiteren über eine kontaktlose Schnittstelle 19, beispielsweise über BlueTooth, DECT, WLAN oder eine RFID-Schnittstelle verfügen. Mit dieser Schnittstelle 10 kann es im Nahbereich mit anderen Kommunikationsgeräten 20 kommunizieren. Die Kommunikationsgeräte 20 verfügen ebenfalls über eine solche kontaktlose Schnittstelle 21 im Nahbereich und somit hat das Vehikel 11 die Möglichkeit, sobald es sich im PAN (Personal Area Network) befindet an ein Kommunikationsgerät 20 eine Werbenachricht zu senden oder von einem solchen Gerät 20 eine Nachricht zu empfangen. Als Kommunikationsgerät 20 sind beispielsweise Computer, tragbare Computer, Kopfhörer, Mobiltelefone, Bluetooth, Spielkonsolen (playstation), pDAs oder andere an eine RFID-Schnittstelle angeschlossenen Geräte denkbar.

Es ist nun also erfindungsgemäss einerseits möglich, dass der Nachrichtenserver 1 mit seinem Standortbestimmungssystem 3 kontinuierlich oder in bestimmten Zeitabständen die aktuelle Position des Vehikels 11 bestimmt und gleichzeitig sich in der Nähe des Vehikels 11 befindende Mobilgeräte 9, die jeweils mit einem Identifizierungsmodul 10 ausgestattet sind, erfasst. An die durch das Standortbestimmungssystem 3 bestimmten Mobilgeräte 9 können nun über das bereits genannte Modul 2 des Nachrichtenservers 1 und über das Telekommunikationsnetz 8 genannte elektronische Werbemeldungen versendet werden. Es ist denkbar, dass die elektronischen Werbemitteilungen direkt vom Nachrichtenserver 11 gesendet werden. Die Nähe des Vehikels 11 löst somit das Versenden einer elektronischen Werbemitteilung an die Mobilgeräte 9 aus. Unter den sich in der Nähe befindenden Mobilgeräte 9 sind solche zu verstehen, die sich in Sicht-oder Hörnähe zum Vehikel 11 befinden. Es ist aber auch denkbar, dass das Vehikel 11 selbst die elektronischen Werbemitteilungen über das Telekommunikationsnetz 8 und den Nachrichtenserver 1 an die identifizierten Mobilgeräte 9 sendet.

Erfindungsgemäss ist es ebenso möglich, dass das Vehikel 11 über die genannten kontaktlosen Schnittstellen 19, 21 einem Kommunikationsgerät 20, dass sich in der Nähe des Vehikels 11 befindet, eine elektronische Werbemeldung sendet. In dieser Ausführungsform wird die Reichweite der kontaktlosen Schnittstelle 19, 21 die Nähe des Vehikels 11 zum Kommunikationsgerät 20 bestimmen. Die elektronische Werbemeldungen in Sinne dieser Erfindung können als SMS, USSD, E-Mails, IP-Pakete, Dateien oder web-pages vom Nachrichtenserver 1 oder vom Vehikel 11 versendet (oder empfangen) werden. Es kann sich auch um Nachrichten handeln, die Multimediadateien, also Musikstücke (mp3), Filme, Videos, etc. enthalten.

Im Sinne der vorliegenden Erfindung bewegt sich das Vehikel 11 in einem Netz von Kommunikationsgeräten 9, 20 und wenn sich das Vehikel 11 einem der genannten Kommunikationsgeräte 9, 20 nähert, wird die Sendung einer elektronischen Werbe-, Informations- oder Sprachnachricht an das Kommunikationsgerät 9, 20 vom Vehikel 11 selbst oder von einem anderen Kommunikationsgerät, also beispielsweise dem Nachrichtenserver 1, ausgelöst.

Während des Weges 12, welchen das Vehikel 11 zurücklegt, könnte der Nachrichtenserver 1 und/oder das Vehikel 11 nun an alle sich in der Nähe befindenden Mobilgeräte 9 oder Kommunikationsgeräte 20 eine elektronische Werbemeldung im Sinne einer Broadcast-SMS senden. In diesem Sinn kann eine breite Verteilung von Werbe-, Informations-, Sprachmeldungen an alle sich in der Nähe des Vehikels befindenden Mobilgeräte 9 oder Kommunikationsgeräte 20 erfolgen, um die Benutzer dieser Geräte zu informieren. Dies kann beispielsweise während einer Veranstaltung sein, in dem die Besucher aktuelle Programmhinweise, andere Informationen oder Produktwerbung erhalten. Während eines Verkehrsstaus auf der Autobahn beispielsweise kann ein Modellflugzeug über die Autos hinweg fliegen und die Autofahrer über die Länge des Staus, über Wartezeiten informieren oder frühzeitig zu empfehlen, die Autobahn bei der nächsten Ausfahrt doch besser zu verlassen. Zur besseren Wahrnehmung des Vehikels 11 kann es zweckmässig sein, dass es während seiner Bewegung kontinuierlich oder zu bestimmten Zeitpunkten mit akustischen oder optischen Mitteln, wie Lichtern und Signaltönen, etc, auf sich aufmerksam macht.

Ebenso könnten die elektronischen Werbemeldungen nur an sich in der Nähe des Vehikels befindende Mobilgeräte 9 oder Kommunikationsgeräte 20 gesandt werden, deren Benutzer einen bestimmten Dienst abonniert haben, die ein bestimmtes Benutzerprofil haben oder die gewisse Eigenschaften aufweisen. So ist es denkbar, dass nur Besitzer von Mobilgeräten 9 informiert werden, die über eine bestimmte Marke oder ein bestimmtes Modell verfügen. Die Besitzer erhalten dann beispielsweise mittels des Vehikels 11 Informationen über produktspezifische Neuerungen. Auch abonnierte Dienste, wie Wettermeldungen, die ausgelosten Lottozahlen oder Informationen über zu verkaufende Produkte können auf die genannte Art übertragen werden.

Die Route des Vehikels 11 muss selbstverständlich an den aktuellen Verwendungszweck angepasst werden. Es kann sich beispielsweise entlang einer vorgegebenen und vorprogrammierten Route bewegen und durch ein Modul 6, welches sich im Speicherbereich 4 des Nachrichtenservers 1 befindet, durch an sich bekannte Mittel ferngesteuert werden. Es wird somit ein explizites Ziel oder eine explizite Route vorgegeben. Ein derartiges Modul 15 zur Richtungsbestimmung kann sich aber auch in einem Speicherbereich 14 des Vehikels 11 selbst befinden. Das Vehikel 11 könnte beispielsweise alle Benutzer in einer Stadt oder in einem Ort, welche einen Informations-News-Dienst abonniert haben, auf seinem Weg 12 berücksichtigen.

Andererseits kann sich das Vehikel 11 in einer Richtung oder entlang einer Route bewegen, die sich nach bestimmten Ereignissen ändert oder entsprechend angepasst wird. Wenn sich entlang einer Route oder in einer bestimmten Richtung eine Zeitlang keine weiteren Mobilgeräte 9, Kommunikationsgeräte 20 oder andere Geräte, die willig und fähig sind, Werbemeldungen zu empfangen, mehr finden lassen und seine Reise dadurch sinnlos wird, könnte es von sich aus oder durch den Nachrichtenserver 1 einen Befehl zur Richtungsänderung bekommen. Ein "intelligentes" Vehikel 11 würde bestimmte, wiederkehrende Ereignisse speichern, so beispielsweise dass es in einem bestimmten Bereich um eine bestimmte Uhrzeit sehr viele elektronische Werbemeldungen versenden kann und zu einem anderen Zeitpunkt eher weniger. Es verarbeitet diese oder andere Informationen und passt seine Route oder Bewegungsrichtung entsprechend an. Auch ist es denkbar, dass sich das Vehikel 11 in einer Richtung oder entlang einer Route bewegt, in der die Dichte von Mobilgeräten 9 oder Kommunikationsgeräten 20 mindestens gleich bleibt oder sich vergrössert und in der es auf diese Weise mehr elektronische Werbemeldungen versenden kann. Auch könnte es sich in einer Richtung bewegen, in der sich bestimmte Eigenschaften der Sende- oder Empfangsgeräte ändern, so könnte also z.B. eine bestimmte Marke oder ein Modell eines Mobilgeräts 9 in einer bestimmten Richtung öfters vorhanden sein. Eine andere Möglichkeit wäre, die Route derart zu gestalten, um möglichst vielen Interessenten eine Werbemeldung zu senden. Die Versendung könnte von anderen Ereignissen ausgelöst werden, wie Zeit, absoluter Standort, Inhalt einer Webseite oder auf ausdrücklichen Befehl hin. Ein Vehikel 11 könnte die Nachrichten auch selber oder mindestens teilweise selbst gestalten, so zum Beispiel durch das Aufnehmen von Bildern durch eine in das Vehikel 11 eingebaute Kamera.

In einer weiteren Ausführungsform könnte das Vehikel 11 auf seinem Weg 12 Informationen aus verschiedenen Kommunikationsgeräten 9, 20 sammeln bzw. verschiedene Geräte auslesen. Eine Alarmanlage könnte so einfach überprüft werden. Für den Fall, dass eine negative Meldung empfangen wird (so zum Beispiel, dass ein Wachmann nicht an einem bestimmten Ort war) könnte ein Alarm in einer Zentrale ausgelöst werden. Auch für Wettbewerbe, Umfragen, etc. könnte dieses Vehikel 11 in dieser Ausführungsform genutzt werden.

Wiederum kann je nach Verwendungszweck dem Empfänger einer elektronischen Werbemeldung diese Nachricht verrechnet oder vergütet werden, d.h. dass er für diese Nachrichtung bezahlen muss oder bezahlt wird. Zu diesem Zweck befindet sich im Speicherbereich 4 des Nachrichtenservers 1 ein Modul 5 zur Verrechnen dieser empfangenen elektronischen Werbemeldung. Ein entsprechendes Modul könnte auch im Vehikel 11 vorhanden sein. Das Vehikel 11 könnte auch auf Anweisung eines Absenders einer elektronischen Werbemeldung seine Route oder Richtung ändern. Wenn jemand beispielsweise das Vehikel 11 zu Werbezwecken mieten möchte, könnte er Anweisungen zum Kreis der Empfänger und den Inhalt der zu versendenden Werbemeldung an den Nachrichtenserver 1 oder das Vehikel 11 schicken und dieses verrichtet die Verteilung der Werbung auf die oben beschriebene Art und Weise. Diesem Benutzer oder Mieter des Vehikels 11 würde das Senden dieser elektronischen Mitteilung an das Vehikel 11 oder den Nachrichtenserver 1 verrechnet, d.h. er müsste dafür bezahlen.

In einer weiteren Ausführungsform nähert sich das Vehikel 11 einem Kommunikationsgerät 20 und überprüft bzw. sucht selbstständig, ob das Kommunikationsgerät 20 eine zu versendende Mitteilung hat, d.h. ob beispielsweise in einem bestimmten Verzeichnis eine Datei abgelegt ist oder ob etwa eine speziell markierte oder benannte Datei vorhanden ist. Ist dies der Fall und stellt das Vehikel 11 es fest, lädt es die Datei, die einen Film, ein Musikstück oder eine andere, bereits beschriebene Werbenachricht enthalten kann, etc. herunter und verteilt sie in der genannten Weise. Es ist nicht unbedingt notwendig, dass der Benutzer oder das Kommunikationsgerät 20 selbst die Kontrolle durch das Vehikel 11 oder das Herunterladen der Datei feststellt.

Eine empfangene elektronische Werbemeldung kann nach Erhalt im Speicherbereich 4 des Nachrichtenservers 1 oder im Speicherbereich 14 des Vehikels 11 gespeichert werden. In einer Datenbank 7, die sich im Speicherbereich 4 des Nachrichtenservers 1 befindet, aber auch im Vehikel 11 vorhanden sein könnte, könnten auch die bereits erwähnten Benutzerprofile, -Wünsche, Routen etc. gespeichert werden und die elektronischen Werbemeldungen würden nur nach Abgleich mit dieser Datenbank 7 versendet. Im Rahmen der vorliegenden Erfindung kann das Vehikel 11 elektronische Werbemeldungen an andere sich in der Nähe befindende Vehikel 11 senden und/oder von anderen sich in der Nähe befindenden Vehikeln 11 empfangen.

Vorteilhaft können mit dem erfindungsgemässen Verfahren elektronische Werbe, Informations-, oder Sprachmeldungen an eine grosse Anzahl von Personen, die über ein entsprechendes Mobilgerät 9 oder ein Kommunikationsgerät 20 verfügen, und sich an verschiedenen Orten aufhalten, versendet werden. Da man die elektronische Werbemeldung auch spontan über den bereits genannten Nachrichtenserver 1 ändern kann, ist es nicht notwenig, dass das Vehikel 11 zu einer Basisstation zurückkehrt, um die zu versendende Werbung oder die Informationen auszutauschen oder zu verändern.

### Bezugszeichenliste

- 1: Nachrichtenserver im Telekommunikationsnetz 8
- 2: Modul im Nachrichtenserver 1 zum Versenden/Empfangen von Werbemeldungen
- 3: Standortbestimmungssystem im Nachrichtenserver 1
- 4: Speicherbereich im Nachrichtenserver 1
- 5: Modul im Speicherbereich 4 zum Verrechnen
- 6: Modul im Speicherbereich 4 zur Richtungsbestimmung des Vehikels 11
- 7: Datenbank im Nachrichtenserver 1
- 8: Telekommunikationsnetz
- 9: Kommunikationsgerät, Mobilgerät
- 10: Identifizierungsmodul von Mobilgerät 9
- 11: Vehikel
- 12: Weg des Vehikels 11
- 13: Identifizierungsmodul von Vehikel 11
- 14: Speicherbereich im Vehikel 11
- 15: Modul im Speicherbereich 14 zur Richtungsbestimmung des Vehikels
- 16: Sensor
- 17: Einrichtung zur Richtungsbestimmung des Vehikels 11
- 18: Energieversorgungseinrichtung des Vehikels 11
- 19: Schnittstelle am Vehikel 11 zum Versenden/Empfangen von Werbemeldungen
- 20: Kommunikationsgerät
- 21: Schnittstelle am Kommunikationsgerät 20 zum Versenden/Empfangen von Werbemeldungen

## Patentansprüche

1. Verfahren zum Versenden von elektronischen Werbe-, Informations- oder Sprachnachrichten mittels eines steuerbaren, sich bewegenden, unbemannten Vehikels (11), wobei das Verfahren die folgenden Verfahrensschritte umfasst
das Vehikel (11) bewegt sich in einem Netz von Kommunikationsgeräten (9, 20) in eine Richtung und
wenn sich das Vehikel (11) einem Kommunikationsgerät (9, 20) nähert, wird die Sendung einer elektronische Werbe-, Informations- oder Sprachnachricht an das Kommunikationsgerät (9, 20) vom Vehikel (11) selbst oder von einem anderen Kommunikationsgerät, das mit dem Vehikel über eine Telekommunikationsnetz verbunden ist, ausgelöst, wobei die Werbe-, Informations- oder Sprachnachricht an alle sich in der Nähe befindenden Kommunikationsgeräte (9, 20) oder an einen vorbestimmten Kreis von Kommunikationsgeräten (9, 20), die sich in der Nähe befinden, gesendet wird.

2. Verfahren nach Anspruch 1, **dadurch gekennzeichnet, dass** das Vehikel (11) die elektronische Werbe-, Informations- oder Sprachnachricht mittels einer Schnittstelle (19) wie Bluetooth, DECT, WLAN, RFID oder einer anderen geeigneten Schnittstelle an sich in der Nähe befindende elektronische Kommunikationsgeräte (20) wie Computer, tragbare Computer, Kopfhörer, Mobiltelefone, Bluetooth, Spielkonsolen oder pDAs versendet.

3. Verfahren nach Anspruch 1, **dadurch gekennzeichnet, dass** das Vehikel (11) von einem Nachrichtenserver (1) als benanntes anderes Kommunikationsgerät innerhalb eines Telekommunikationsnetzes (8) identifiziert wird, wobei der Nachrichtenserver (1) die Position des Vehikels (11) und von sich in der Nähe des Vehikels (11) befindenden Mobilgeräten (9) als benannte Kommunikationsgeräte erfasst und der Nachrichtenserver (1) und/oder das Vehikel (11) über das Telekommunikationsnetz (8) die benannte Werbe-, Informations- oder Sprachnachricht an diese Mobilgeräte (9) versendet.

4. Verfahren nach Anspruch 3, **dadurch gekennzeichnet, dass** der Nachrichtenserver (1) und/oder das Vehikel (11) die Werbe-, Informations- oder Sprachnachricht an alle sich in der Nähe des Vehikels (11) befindenden Mobilgeräte (9) sendet oder nur an sich in der Nähe des Vehikels (11) befindenden Mobilgeräte (9), deren Benutzer einen bestimmten Dienst abonniert haben, die ein bestimmtes Benutzerprofil haben oder die eine gewisse Eigenschaft aufweisen.

5. Verfahren nach einem der Ansprüche 2 bis 4, **dadurch gekennzeichnet, dass** der Nachrichtenserver (1) oder das Vehikel (11) die Werbe-, Informations- oder Sprachnachricht als SMS. USSD, E-Mails, IP-Pakete, Dateien oder als web-pages versendet.

6. Verfahren nach einem der Ansprüche 3 bis 5, **dadurch gekennzeichnet, dass** der Nachrichtenserver (1) und/oder das Vehikel (11) die Werbe-, Informations- oder Sprachnachricht mittels eines vorhandenen Telekommunikationsnetzes (8) wie GSM, UMTS oder eines anderen geeigneten Netzes versendet.

7. Verfahren nach einem der Ansprüche 2 bis 6, **dadurch gekennzeichnet, dass** der Benutzer eines Mobilgerätes (9) oder eines Kommunikationsgerätes (20) für das Empfangen einer Werbe-, Informations- oder Sprachnachricht vom Nachrichtenserver (1) und/oder vom Vehikel (11) bezahlen muss oder bezahlt wird.

8. Verfahren nach einem der Ansprüche 2 bis 7, **dadurch gekennzeichnet, dass** der Benutzer eines Mobilgerätes (9) oder eines Kommunikationsgerätes (20) eine Werbe-, Informations- oder Sprachnachricht an das Vehikel (11) oder den Nachrichtenserver (1) zur Weiterversendung sendet, und diese dem Sender dieser Nachricht verrechnet wird.

9. Verfahren nach einem der Ansprüche 2 bis 8, **dadurch gekennzeichnet, dass** das Vehikel (11) eine Werbe-, Informations- oder Sprachnachricht in einem Kommunikationsgerät (20) sucht und herunterlädt und an andere Kommunikationsgeräts (9, 20) weiterversendet.

10. Verfahren nach einem der Ansprüche 2 bis 9, **dadurch gekennzeichnet, dass** das Vehikel (11) eine Werbe-, Informations- oder Sprachnachricht an andere sich in der Nähe befindende Vehikel (11) sendet und/oder von anderen sich in der Nähe befindenden Vehikeln (11) empfängt.

11. Verfahren nach Anspruch 8 bis 10, **dadurch gekennzeichnet, dass**
eine empfangene Werbe-, Informations- oder Sprachnachricht nach Erhalt im Nachrichtenserver (1) oder im Vehikel (11) gespeichert wird.

12. Verfahren nach Anspruch 2 bis 11, **dadurch gekennzeichnet, dass**
das Vehikel (11) sich entlang einer vorgegebenen und vorprogrammierten Route bewegt.

13. Verfahren nach Anspruch 2 bis 12, **dadurch gekennzeichnet, dass**
das Vehikel (11) sich in einer Richtung oder entlang einer Route bewegt, die sich nach bestimmten Ereignissen ändert oder angepasst wird.

14. Verfahren nach Anspruch 13, **dadurch gekennzeichnet, dass**
das Vehikel (11) bestimmte, wiederkehrende Ereignisse speichert und verarbeitet und seine Route oder Bewegungsrichtung entsprechend anpasst.

15. Verfahren nach Anspruch 13, **dadurch gekennzeichnet, dass**
das Vehikel (11) auf Anweisung eines Absenders einer elektronischen Mitteilung seine Route oder Richtung ändert.

16. Verfahren nach Anspruch 13, **dadurch gekennzeichnet, dass**
das Vehikel (11) sich in einer Richtung oder entlang einer Route bewegt, in der die Dichte der Mobil- oder Kommunikationsgeräte (9, 20) gleich bleibt oder vergrössert.

17. Verfahren nach Anspruch 13, **dadurch gekennzeichnet, dass**
das Vehikel (11) sich in einer Richtung oder entlang einer Route bewegt, in der sich bestimmte Eigenschaften der Mobil- oder Kommunikationsgeräte (9, 20) ändern.

18. Verfahren nach einem der Ansprüche 1 bis 17, **dadurch gekennzeichnet, dass**
sich als Vehikel (11) ein Flugzeug oder Mikroflugzeug, ein Helikopter oder Mikrohelikopter, ein Ballon, ein Auto oder Spielzeugauto, ein Schiff oder ein Roboter entlang der genannten Route oder in der genannten Richtung bewegt.

19. Verfahren nach einem der Ansprüche 1 bis 18, **dadurch gekennzeichnet, dass**
das Vehikel (11) während seiner Bewegung kontinuierlich oder zu bestimmten Zeitpunkten mit akustischen oder optischen Mitteln auf sich aufmerksam macht.

20. Verfahren nach einem der Ansprüche 1 bis 19, **dadurch gekennzeichnet, dass**
das Vehikel (11) mit Benzin, Wasserstoff, Gas, durch solare Energie, durch Batterien oder Akkumulatoren oder einen anderen Treibstoff betrieben wird und/oder das Vehikel zum Auftanken von Treibstoff zu einer Service-Station zurückkehrt.

21. Vehikel (11) zum Versenden von elektronischen Werbe-, Informations- oder Sprachnachrichten nach dem Verfahren des Anspruchs 1, welches Vehikel (11) steuerbar, beweglich und unbemannt ist und einen Speicherbereich (14) zum Speichern der elektronischen Werbe-, Informations- oder Sprachnachrichten und zum Speichern des Kreises der Empfänger aufweist und mindestens eine Schnittstelle (19) zum Versenden der Werbe-, Informations- oder Sprachnachrichten an ein anderes Kommunikationsgerät (9. 20).

22. Vehikel (11) nach Anspruch 21, **dadurch gekennzeichnet, dass** es mit einer Schnittstelle (19) wie Bluetooth, DECT, WLAN oder RFID ausgestattet ist, die im Nahbereich arbeitet.

23. Vehikel (11) nach Anspruch 21, **dadurch gekennzeichnet, dass** es mit einer Sendestation ausgestattet ist, mit welcher es die elektronischen Werbe-, Informations- oder Sprachnachrichten innerhalb eines Telekommunikationsnetzes (8) an andere Mobilgeräte (9) senden kann.

## Claims

1. Method for sending electronic advertising announcements, information news or voice messages by means of a controllable, moving, unmanned vehicle (11), the method including the following method steps:
the vehicle (11) moves in a network of communication devices (9, 20) in one direction and
when the vehicle (11) moves close to a communication device (9, 20) the sending of an electronic advertising announcement, information news or voice message to the communication device (9, 20) is triggered by the vehicle (11) itself or by another communication device, which is connected to the vehicle over a telecommunication network, whereby the announcement, information news or voice message is sent to all communication devices (9, 20), which are in proximity, or to a predefined circle of communication devices (9, 20), which are in proximity.

2. Method according to claim 1, **characterized in that** the vehicle (11) sends the electronic advertising announcement, information news or voice message by means of an interface (19) such as Bluetooth, DECT, WLAN, RFID or another suitable interface to electronic communication devices (20) located in the vicinity, such as computer, portable computer, headphones, mobile telephone, Bluetooth, play consoles or PDAs.

3. Method according to claim 1, **characterized in that** the vehicle (11) is identified by a message server (1) as said other communication device within a telecommunication network (8), wherein the message server (1) detects the position of the vehicle (11) and of the mobile devices (9) located in the vicinity of the vehicle (11) as said communication devices and wherein the message server (1) and/or the vehicle (11) sends said advertising announcement, information news or voice message over the telecommunication network (8) to these mobile devices (9).

4. Method according to claim 3, **characterized in that** the message server (1) and/or the vehicle (11) sends the advertising announcement, information news or voice message to all mobile devices (9) located in the vicinity of the vehicle (11) or only to the mobile devices (9) located in the vicinity of the vehicle (11) whose users have subscribed a certain service, who have a certain user profile or who have a certain characteristic.

5. Method according to one of the claims 2 to 4, **characterized in that** the message server (1) or the vehicle (11) sends the advertising announcement, information news or voice message as SMS, USSD, e-mail, IP packets, files or web pages.

6. Method according to one of the claims 3 to 5, **characterized in that** the message server (1) and/or the vehicle (11) sends the advertising announcement, information news or voice message by means of an available telecommunication network (8) such as GSM, UMTS or another suitable network.

7. Method according to one of the claims 2 to 6, **characterized in that** the user of a mobile device (9) or of a communication device (20) must pay or is paid for receiving an advertising announcement, information news or voice message from the message server (1) and/or from the vehicle (11).

8. Method according to one of the claims 2 to 7, **characterized in that** the user of a mobile device (9) or of a communication device (20) sends an advertising announcement, information news or voice message to the vehicle (11) or to the message server (1) for forwarding, and this is billed to the sender of this message.

9. Method according to one of the claims 2 to 8, **characterized in that** the vehicle (11) searches for an advertising announcement, information news or voice message in a communication device (20) and downloads it and forwards it to other communication devices (9, 20).

10. Method according to one of the claims 2 to 9, **characterized in that** the vehicle (11) sends to other vehicles (11) located in the vicinity and/or receives from other vehicles (11) located in the vicinity an advertising announcement, information news or voice message.

11. Method according to one of the claims 8 to 10, **characterized in that** a received advertising announcement, information news or voice message is stored upon receipt in the message server (1) or in the vehicle (11).

12. Method according to one of the claims 2 to 11, **characterized in that** the vehicle (11) moves along a predefined and preprogrammed route.

13. Method according to one of the claims 2 to 12, **characterized in that** the vehicle (11) moves in a direction or along a route that changes or is adapted after certain events.

14. Method according to claim 13, **characterized in that** the vehicle (11) stores and processes certain recurring events and adapts its route or direction of movement accordingly.

15. Method according to claim 13, **characterized in that** the vehicle (11) changes its route or direction upon instruction of a sender of an electronic message.

16. Method according to claim 13, **characterized in that** the vehicle (11) moves in a direction or along a route where the density of the mobile or communication devices (9, 20) remains constant or increases.

17. Method according to claim 13, **characterized in that** the vehicle (11) moves in a direction or along a route where certain characteristics of the mobile or communication devices (9, 20) change.

18. Method according to one of the claims 1 to 17, **characterized in that** an airplane or micro aircraft, a helicopter or micro helicopter, a balloon, a car or a toy car, a boat or a robot moves as a vehicle (11) along said route or in said direction.

19. Method according to one of the claims 1 to 18, **characterized in that** the vehicle (11) draws attention to itself continuously or at certain pints in time during its movement with acoustic or optical means.

20. Method according to one of the claims 1 to 19, **characterized in that** the vehicle (11) is powered with petrol, hydrogen, gas, by solar energy, batteries or accumulators or another fuel and/or that the vehicle, to refuel, returns to a service station.

21. Vehicle (11) for sending electronic advertising announcements, information news or voice messages according the method of claim 1, said vehicle (11) is controllable, moving, unmanned and having a memory area (14) for storing the electronic advertising announcements, information news or voice messages and for the storage of the circle of recipients and at least one interface (19) for sending the electronic advertising announcements, information news or voice messages to another communication device (9, 20).

22. Vehicle (11) according to claim 21, **characterized in that** it is provided with an interface (19) such as Bluetooth, DECT, WLAN or RFID working at close range.

23. Vehicle (11) according to claim 21, **characterized in that** it is provided with a sending station with which it can send the electronic advertising announcements, information news or voice messages within a telecommunication network (8) to other mobile devices (9).

## Revendications

1. Méthode pour envoyer des messages électroniques publicitaires, d'information ou vocaux au moyen d'un véhicule contrôlable, en déplacement, inoccupé (11), la méthode incluant les étapes de méthode suivantes:
le véhicule (11) se déplace dans un réseau d'appareils de communication (9, 20) dans une direction et
lorsque le véhicule (11) s'approche d'un appareil de communication (9, 20) l'envoi d'un message électronique publicitaire, d'information ou vocal à l'appareil de communication (9, 20) est déclenché par le véhicule (11) lui-même ou par un autre appareil de communication, qui est connecté au véhicule par un réseau de télécommunication, **caractérisée en ce que** le message publicitaire, d'information ou vocal est envoyé à tous les appareils de communication (9, 20) qui sont à proximité, ou à un cercle prédéfini d'appareils de communication (9, 20) qui sont à proximité.

2. Méthode selon la revendication 1, **caractérisée en ce que** le véhicule (11) envoie le message électronique publicitaire, d'information ou vocal au moyen d'une interface (19) telle que Bluetooth, DECT, WLAN, RFID ou une autre interface appropriée aux appareils électroniques de communication (20) se trouvant à proximité, tels qu'ordinateurs, ordinateurs portables, écouteurs, téléphones mobiles, Bluetooth, consoles de jeux ou PDA.

3. Méthode selon la revendication 1, **caractérisée en ce que** le véhicule (11) est identifié par un serveur de messagerie (1) comme étant ledit autre appareil de communication au sein d'un réseau de télécommunication (8), **caractérisée en ce que** le serveur de messagerie (1) détecte la position du véhicule (11) et des appareils mobiles (9) situés à proximité du véhicule (11) comme étant lesdits appareils de communication et **en ce que** le serveur de messagerie (1) et/ou le véhicule (11) envoie ledit message publicitaire, d'information ou vocal par le biais du réseau de télécommunication (8) à ces appareils mobiles (9).

4. Méthode selon la revendication 3, **caractérisée en ce que** le serveur de messagerie (1) et/ou le véhicule (11) envoie ledit message publicitaire, d'information ou vocal à tous les appareils mobiles (9) situés à proximité du véhicule (11) ou seulement aux appareils mobiles (9) situés à proximité du véhicule (11) dont les utilisateurs ont abonné un certain service, ont un certain profil d'utilisateur ou ont une certaine caractéristique.

5. Méthode selon l'une des revendications 2 à 4, **caractérisée en ce que** le serveur de messagerie (1) ou le véhicule (11) envoie ledit message publicitaire, d'information ou vocal comme SMS, USSD, e-mail, paquets IP, fichiers ou pages internet.

6. Méthode selon l'une des revendications 3 à 5, **caractérisée en ce que** le serveur de messagerie (1) ou le véhicule (11) envoie ledit message publicitaire, d'information ou vocal au moyen d'un réseau de télécommunication disponible (8) tel que GSM, UMTS ou un autre réseau approprié.

7. Méthode selon l'une des revendications 2 à 6, **caractérisée en ce que** l'utilisateur d'un appareil mobile (9) ou d'un appareil de communication (20) doit payer ou est payé pour recevoir un message publicitaire, d'information ou vocal du serveur de messagerie (1) et/ou du véhicule (11).

8. Méthode selon l'une des revendications 2 à 7, **caractérisée en ce que** l'utilisateur d'un appareil mobile (9) ou d'un appareil de communication (20) envoie un message publicitaire, d'information ou vocal au véhicule (11) ou au serveur de messagerie (1) pour transmission, et que celui-ci est facturé à l'émetteur de ce message.

9. Méthode selon l'une des revendications 2 à 8, **caractérisée en ce que** le véhicule (11) cherche un message publicitaire, d'information ou vocal dans un appareil de communication (20) et le télécharge et le transmets à d'autres appareils de communication (9, 20).

10. Méthode selon l'une des revendications 2 à 9, **caractérisée en ce que** le véhicule (11) envoie à d'autres véhicules (11) situés à proximité et/ou reçoit d'autres véhicules (11) situés à proximité un message publicitaire, d'information ou vocal.

11. Méthode selon l'une des revendications 8 à 10, **caractérisée en ce qu'**un message publicitaire, d'information ou vocal reçu est sauvegardé après réception dans le serveur de messagerie (1) ou dans le véhicule (11).

12. Méthode selon l'une des revendications 2 à 11, **caractérisée en ce que** le véhicule (11) se déplace le long d'une route prédéfinie et préprogrammée.

13. Méthode selon l'une des revendications 2 à 12, **caractérisée en ce que** le véhicule (11) se déplace dans une direction ou le long d'une route qui change ou est adaptée après certains évènements.

14. Méthode selon la revendication 13, **caractérisée en ce que** le véhicule (11) sauvegarde et traite certains évènements récurrents et adapte sa route ou direction de mouvement en fonction.

15. Méthode selon la revendication 13, **caractérisée en ce que** le véhicule (11) change sa route ou direction sur instruction d'un émetteur d'un message électronique.

16. Méthode selon la revendication 13, **caractérisée en ce que** le véhicule (11) se déplace dans une direction ou le long d'une route dans laquelle la densité des appareils mobiles ou de communication (9, 20) reste constante ou augmente.

17. Méthode selon la revendication 13, **caractérisée en ce que** le véhicule (11) se déplace dans une direction ou le long d'une route où certaines caractéristiques des appareils mobiles ou de communication (9, 20) changent.

18. Méthode selon l'une des revendications 1 à 17, **caractérisée en ce qu'**un avion ou un micro avion, un hélicoptère ou un micro hélicoptère, un ballon, une voiture ou une voiture de jeu, un bateau ou un robot se déplace en tant que véhicule (11) le long de ladite route ou dans ladite direction.

19. Méthode selon l'une des revendications 1 à 18, **caractérisée en ce que** le véhicule (11) attire l'attention sur lui-même en continu ou à certains moments définis lors de son déplacement par des moyens acoustiques ou optiques.

20. Méthode selon l'une des revendications 1 à 19, **caractérisée en ce que** le véhicule (11) fonctionne à l'essence, à l'hydrogène, au gaz, à l'énergie solaire, à piles ou accumulateurs ou à un autre carburant et/ou que le véhicule retourne à une station-service pour faire le plein de carburant.

21. Véhicule (11) pour envoyer des messages électroniques publicitaires, d'information ou vocaux selon la méthode de la revendication 1, ledit véhicule (11) est contrôlable, en déplacement, inoccupé et présente un espace mémoire (14) pour sauvegarder les messages électroniques publicitaires, d'information ou vocaux et pour la sauvegarde du cercle de destinataires et au moins une interface (19) pour envoyer les messages électroniques publicitaires, d'information ou vocaux à d'autres appareils de communication (9, 20).

22. Véhicule (11) selon la revendication 21, **caractérisé en ce qu'**il est équipé d'une interface (19) telle que Bluetooth, DECT, WLAN ou RFID qui fonctionne à faible portée.

23. Véhicule (11) selon la revendication 21, **caractérisé en ce qu'**il est équipé d'un émetteur avec lequel il peut envoyer les messages électroniques publicitaires, d'information ou vocaux dans un réseau de télécommunication (8) à d'autres appareils mobiles (9).
